(19) Europäisches Patentamt
European Patent Office
Office européen des brevets

(11) Veröffentlichungsnummer: **0 390 741 A1**

# (12) EUROPÄISCHE PATENTANMELDUNG

(21) Anmeldenummer: **90810225.4**

(51) Int. Cl.5: **A01N 47/10, A01N 47/12**

(22) Anmeldetag: **21.03.90**

(30) Priorität: **30.03.89 CH 1161/89**

(43) Veröffentlichungstag der Anmeldung:
**03.10.90 Patentblatt 90/40**

(84) Benannte Vertragsstaaten:
**BE CH DE DK FR GB IT LI NL**

(71) Anmelder: **CIBA-GEIGY AG**
**Klybeckstrasse 141**
**CH-4002 Basel(CH)**

(72) Erfinder: **Karrer, Friedrich, Dr.**
**Rebbergstrasse 5**
**CH-4800 Zofingen(CH)**
Erfinder: **Rindlisbacher, Alfred**
**Lachmattstrasse 69/3**
**CH-4132 Muttenz(CH)**

## (54) Schädlingsbekämpfung.

(57) Verwendung des 2-[4-(3,5-Difluorphenoxy)-phenoxy]-äthylcarbaminsäureäthylesters zur Bekämpfung von Reiskulturen schädigenden Zikaden.

EP 0 390 741 A1

## Schädlingsbekämpfung

Die vorliegende Erfindung betrifft die Verwendung des 2-[4-(3,5-Difluorphenoxy)phenoxy]-äthylcarbaminsäure-äthylesters zur Bekämpfung von Reiskulturen schädigenden Zikaden.

Aus der EP-Anmeldung Nr. 0 004 334 ist die Herstellung von an der Phenoxy-Gruppe monosubstituierten 2-(4-Phenoxyphenoxy)-äthylcarbaminsäure-alkylestern und deren Verwendung zur Bekämpfung pflanzenschädigender Insekten bekannt. Weiterhin werden in der GB-PS Nr. 2 084 574 2-[4-(Phenoxy)-phenoxy]-äthylcarbaminsäureester beschrieben, die am H-Atom oder der 2-Stellung der Aethylengruppe alkylsubstituiert sind und unter anderem als Insektizide zur Bekämpfung von pflanzenschädigenden Lepidopteren und Homopteren wirksam sein sollen. In der US-PS Nr. 4 608 389 werden 2-[4-(3,5-Difluorphenoxy)-phenoxy]-äthylcarbaminsäure-alkylest er als Insektizide vorgeschlagen, unter anderem auch der erfindungsgemäss verwendete 2-[4-(3,5-Difluorphenoxy)-phenoxy]-äthylcarbaminsäureäthylester.

Demgegenüber wurde nun überraschenderweise gefunden, dass insbesondere der aus der US-PS Nr. 4 608 389 an sich bekannte 2-[4-(3,5-Difluorphenoxy)-phenoxy]-äthylcarbaminsäure-äthylester speziell hohe Wirksamkeit bei der Bekämpfung von Zikaden, die Reiskulturen befallen, zeigt, z.B. von Zikaden der Familien Delphacidae (mit den Gattungen Nilaparvata und Laodelphax) und Cicadellidae (mit der Gattung Nephotettix), wie z.B. die Arten Nilaparvata lugens, Laodelphax striatellus und Nephotettix cincticeps. Der erfindungsgemäss verwendete Carbaminsäureester ist speziell geeignet zur Bekämpfung von Reis-Zikaden der Gattung Nilaparvata, insbesondere Nilaparvata lugens.

Der erfindungsgemäss verwendete 2-[4-(3,5-Difluorphenoxy)-phenoxy]-äthylcarbaminsäure-äthylester ist gegenüber den vorerwähnten Schädlingen im wesentlichen als Chemosterilant, Ovizid und Populations- bzw. Metamorphosehemmer wirksam.

Der erfindungsgemäss verwendete Carbaminsäureester kann analog dem in der US-PS Nr. 4 608 389 beschriebenen Verfahren hergestellt werden (vgl. das nachstehende Bei spiel 1):

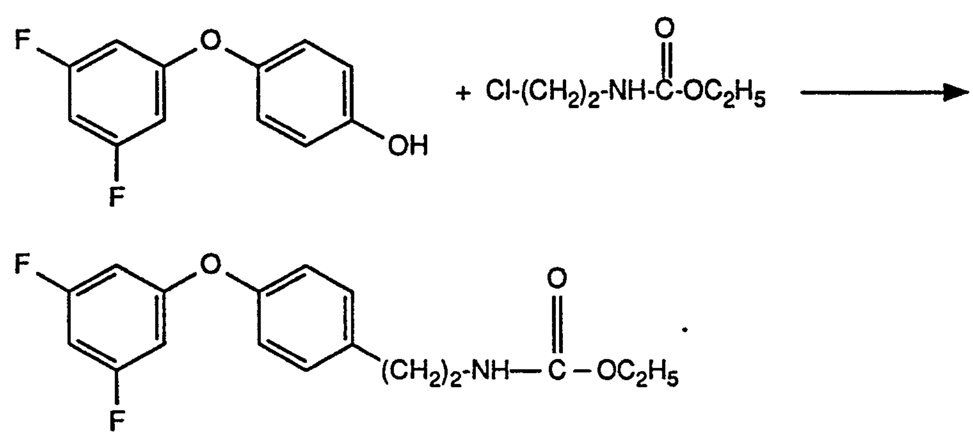

Die insektizide Wirkung des 2-[ 4-(3,5-Difluorphenoxy)-phenoxy]-äthylcarbaminsäureäthylesters lässt sich durch Zusatz von anderen Insektiziden und/oder Akariziden wesentlich verbreitem und an gegebene Umstände anpassen. Als Zusätze eignen sich z.B. org. Phosphorverbindungen; Nitrophenole und deren Derivate; Formamide; Harnstoffe; pyrethrinartige Verbindungen sowie Carbamate und chlorierte Kohlenwasserstoffe.

Die gute pestizide Wirkung des 2-[ 4-(3,5-Difluorphenoxy)-phenoxy]-äthylcarbaminsäure-äthylesters entspricht einer erzielten Abtötungsrate (Mortalität) von mindestens 50-60 % der erwähnten zu bekämpfenden Schadinsekten.

Der erfindungsgemäss verwendete 2-[4-(3,5-Difluorphenoxy)-phenoxy]-äthylcarbaminsäure-äthylester wird in unveränderter Form oder vorzugsweise zusammen mit den in der Formulierungstechnik üblichen Hilfsmitteln eingesetzt und wird daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die erfindungsgemäss zu verwendenden Formulierungen, d.h. die den insektiziden Wirkstoff und

gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel kömmen in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyl-äther, Essigester, Propylmyristat oder Propylpalmitat, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; Silikonöle oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art der angestrebten Formulierung nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss-oder Tallöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykoleinheit 1 bis 5-Aethylenglykoleinheiten.

Als Beispiele nichtionischer Tenside seien Nonylphenolpolyäthoxyäthanole, Ricinusölpolyglycoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

"McCutcheon's Detergents and Emulsifiers Annual" MC Publishing Corp., Ridgewood, New Jersey, 1979; Dr. Helmut Stache "Tensid Taschenbuch", Carl Hanser Verlag München/Wien 1981.

Die erfindungsgemäss verwendeten insektiziden Zubereitungen enthalten in der Regel 0,1 bis 99 %, insbesondere 0,1 bis 95 % des 2-[4-(3,5-Difluorphenoxy)-phenoxy]-äthylcarbaminsäure-äthylesters, 1 bis 99,9 % eines festen oder flüssigen Zusatzstoffes und 0 bis 25 %, insbesondere 0,1 bis 25 %, eines Tensides, wobei sich die %-Angaben auf das Gewicht beziehen. Während als Handelsware eher konzentrierte Mittel bevorzugt werden, verwendet der Endverbraucher in der Regel verdünnte Mittel bzw. Zubereitungen, die wesentlich geringere Wirkstoffkonzentrationen, wie z.B. 0,1 bis 1000 ppm, aufweisen. Gewöhnlich beträgt die eingesetzte Aufwandmenge des erfindungsgemäss zu verwendenden Wirkstoffes - insbesondere für landwirtschaftliche Kulturflächen - 0,025 bis 1,0 kg/ha, vorzugsweise 0,1 bis 0,5 kg/ha, beispielsweise 0,1 bis 0,25 kg/ha.

Die erwähnten Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Beispiel 1: Herstellung des 2-[4(3,5-Difluorphenoxy)-phenoxy]-äthylcarbaminsäureäthylesters

Zu einer Lösung von 22,2 g 4-(3,5-Difluorphenoxy)-phenol in 80 ml Dimethylformamid werden 27,6 g feinpulveriges Kaliumcarbonat, 18,2 g 2-Chloräthylcarbaminsäureäthyl ester und 1 g gepulvertes Kaliumjodid hinzugefügt. Das Reaktionsgemisch wird unter Rühren während 16 Stunden auf 95 °C erwärmt. Hierauf wird das Reaktionsgemisch filtriert, das Filtrat in 400 ml Wasser gegossen und wiederholt mit Diäthyläther extrahiert. Die vereinigten organischen Phasen werden mit Wasser gewaschen, über Natriumsulfat getrocknet und das Lösungsmittel wird abdestilliert. Der Rückstand wird über Kieselgel chromatographisch gereinigt (Eluierungsmittel: n-Hexan-Diäthyläther 3:1), wodurch der reine 2-[4-(3,5-Difluorphenoxy)-phenoxy]-äthylcarbaminsäure-äthylester als farblose, alsbald kristallin erstarrende Verbindung vom Smp. 54-56 °C erhalten wird. Das $^1$H-NMR-Spektrum steht mit der angegebenen Struktur in Einklang.

Beispiel 2: Populationshemmende Wirkung auf Nilaparvata lugens

Der Test wird an wachsenden Pflanzen durchgeführt. Jeweils 20 Reispflanzen (Dicke des Stengels 1 mm, Höhe ca. 20 cm) werden in Töpfe (Durchmesser von 8 cm) eingepflanzt.

Die Pflanzen werden auf einem Drehteller mit einer wässrigen Emulsionszubereitung enthaltend 12 ppm des Wirkstoffes tropfnass besprüht. Nach dem Antrocknen des Spritzbelages wird jede Pflanze mit 4 frisch geschlüpften adulten Weibchen und zwei frisch geschlüpften adulten Männchen von Nilaparvata besiedelt. Um die Tiere am Entweichen zu hindern, wird über jede besiedelte Pflanze ein Glaszylinder gestülpt und dieser mit einem Gaze-Deckel abgedeckt. Die adulten Tiere bleiben 5 Tage zur Eiablage auf der behandelten Pflanze und werden danach entfernt.

Die Reispflanzen mit den abgelegten Eiern werden dann während 14 Tagen bei 28 °C, 70 % relativer Feuchtigkeit und einer 14-stündigen Photoperiode (10'000 Lux) inkubiert. Die in diesem Zeitraum geschlüpften jungen Nymphen ($F_1$-Generation) werden ausgezählt. Aus dem Vergleich der Anzahl geschlüpfter Nymphen auf den behandelten Pflanzen zu den auf unbehandelten Kontrollpflanzen geschlüpften Tieren wird die prozentuale Reduktion der Nachkommenschaft (% Populationshemmung) bestimmt.

Der 2-[4-(3,5-Difluorphenoxy)-phenoxy]-äthylcarbaminsäure-äthylester zeigt 100%ige Wirkung in obigem Test.

Beispiel 3: Populationshemmende Wirkung auf Nephotettix cincticeps

Der Test wird an wachsenden Reispflanzen durchgeführt. Jeweils 20 Reispflanzen (Dicke des Stengels 1 mm, Höhe ca. 20 cm) werden in Porzellantöpfe von 8 cm Durchmesser eingepflanzt.

Die Pflanzen werden auf einem Drehteller mit einer wässrigen Emulsionszubereitung, enthaltend 400 ppm des Wirkstoffes tropfnass besprüht. Nach dem Antrocknen des Spritzbelages wird jeder Topf mit 4 adulten Weibchen und 2 adulten Männchen (frisch geschlüpft) besiedelt. Um die Tiere am Entweichen zu

hindern, wird über jeden besiedelten Topf ein Plexiglaszylinder gestülpt und dieser mit einem Gazedeckel abgedeckt. Die adulten Tiere bleiben 5 Tage zur Eiablage auf den behandelten Pflanzen und werden danach entfernt. Die Reispflanzen mit den abgelegten Eiern werden während 14 Tagen bei 28° C, 70 % relativer Feuchtigkeit und einer 14-stündigen Photoperiode (10'000 Lux) inkubiert. Die in diesem Zeitraum geschlüpften jungen Nymphen ($F_1$ Generation) werden ausgezählt. Aus dem Vergleich der Anzahl geschlüpfter Nymphen auf den behandelten Pflanzen zu den auf unbehandelten Kontrollpflanzen geschlüpften Tieren wird die prozentuale Reduktion der Nachkommenschaft (% Populationshemmung) bestimmt.

Der 2-[4-(3,5-Difluorphenoxy)-phenoxy]-äthylcarbaminsäure-äthylester zeigt 80-100%ige Wirkung in obigem Test.

Beispiel 4: Vergleichsversuch (Wirkung auf Nilaparvata lugens)

Das vorstehende Beispiel 2 wird wiederholt, mit der Abwandlung, dass zur Bestimmung der Wirkungsgrenze die zu prüfende Verbindung in einer Serie von Tests mit ansteigender Konzentration (von 0,2 bis 400 ppm) angewendet wird. Zur Bewertung wird jeweils diejenige Wirkstoff-Konzentration festgestellt, die zur 80-100%-igen Abtötung der Nilaparvata-Population erforderlich ist:

| Test-Verbindung | | Konzentration erforderlich für 80-100 % Mortalität |
|---|---|---|
| 2-[4-(3,5-Difluorphenoxy)-phenoxy]-äthylcarbaminsäure-äthylester | gemäss vorliegender Erfindung | 0,2 ppm |
| 2-[4-(3,5-Difluorphenoxy)-phenoxy]-propylcarbaminsäure-äthylester | gemäss US-Patentschrift Nr. 4,608,389 | 200 ppm |
| 2-[4-(3,5-Difluorphenoxy)-phenoxy]-äthylthiolcarbaminsäure-äthylester | | 400 ppm |
| 20[4-(3,5-Difluorphenoxy)-phenoxy]-äthylcarbaminsäure-isopropylester | | 12,5 ppm |

Beispiel 5: Insektizide Formulierungen für den Wirkstoff 2-[4-(3,5-Difluorphenoxy)-phenoxy]-äthylcarbaminsäure-äthylester

(% = Gewichtsprozent)

| 1. Spritzpulver | a) | b) | c) |
|---|---|---|---|
| Wirkstoff | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 27 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 2. Emulsions-Konzentrat | a) | b) |
|---|---|---|
| Wirkstoff | 10 % | 10 % |
| Octylphenolpolyäthylenglykoläther (4-5 Mol AeO) | 3 % | - |
| Ca-Dodecylbenzolsulfonat | 3 % | - |
| Ricinusölpolyglykoläther (36 Mol AeO) | 4 % | - |
| Ricinusölthioxilat | - | 25 % |
| Cyclohexanon | 30 % | - |
| Butanol | - | 15 % |
| Xylolgemisch | 50 % | - |
| Essigester | - | 50 % |

Aus diesem Konzentrat können durch Verdünnen mit Wasser Emulsionen jeder gewünschten Konzentration hergestellt werden.

| 3. Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

| 4. Extruder Granulat | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| 5. Umhüllungs-Granulat | |
|---|---|
| Wirkstoff | 3 % |
| Polyäthylenglykol (MG 200) | 3 % |
| Kaolin | 94 % |

Der feingemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| 6. Suspensions-Konzentrat | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Ansprüche

1. Verwendung des 2-[4-(3,5-Difluorphenoxy)-phenoxy]-äthylcarbaminsäureäthylesters zur Bekämpfung von Reiskulturen schädigenden Zikaden.
2. Verwendung gemäss Anspruch 1 zur Bekämpfung von pflanzenschädigenden Zikaden der Familien Delphacidae und Cicadellidae.
3. Verwendung gemäss Anspruch 2 zur Bekämpfung von Zikaden der Gattung Nilaparvata (Familie Delphacidae).
4. Verwendung gemäss Anspruch 2 zur Bekämpfung von Zikaden der Gattung Laodelphax (Familie Delphacidae).
5. Verwendung gemäss Anspruch 2 zur Bekämpfung von Zikaden der Gattung Nephotettix (Familie Cicadellidae).
6. Verwendung gemäss Anspruch 3 zur Bekämpfung von Nilaparvata lugens.
7. Verwendung gemäss Anspruch 4 zur Bekämpfung von Laodelphax striatellus.
8. Verwendung gemäss Anspruch 5 zur Bekämpfung von Nephotettix cincticeps.
9. Verfahren zur Bekämpfung von Reiskulturen schädigenden Zikaden, dadurch gekennzeichnet, dass man die Schädlinge bzw. deren verschiedene Entwicklungsstadien oder ihren Aufenthaltsort mit einer pestizid wirksamen Menge des 2-[4-(3,5-Difluorphenoxy)-phenoxy]-äthylcarbaminsäureäthylesters oder mit einem Mittel enthaltend neben Zusatz-und Trägerstoffen eine pestizid wirksame Menge dieser Verbindung,

in Kontakt bringt oder behandelt.

10. Verfahren gemäss Anspruch 9 zur Bekämpfung von pflanzenschädigenden Zikaden der Familien Delphacidae und Cicadellidae.

11. Verfahren gemäss Anspruch 10 zur Bekämpfung von Zikaden der Gattung Nilaparvata (Familie Delphacidae).

12. Verfahren gemäss Anspruch 10 zur Bekämpfung von Zikaden der Gattung Laodelphax (Familie Delphacidae).

13. Verfahren gemäss Anspruch 10 zur Bekämpfung von Zikaden der Gattung Nephotettix (Familie Cicadellidae).

14. Verfahren gemäss Anspruch 11 zur Bekämpfung von Nilaparvata lugens.

15. Verfahren gemäss Anspruch 12 zur Bekämpfung von Laodelphax striatellus.

16. Verfahren gemäss Anspruch 13 zur Bekämpfung von Nephotettix cincticeps.

Europäisches Patentamt

# EUROPÄISCHER RECHERCHENBERICHT

Nummer der Anmeldung

EP 90810225.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| D,Y | US - A - 4 608 389 (H.KISIDA et al.) * Ansprüche 4-9 * | 1-16 | A 01 N 47/10<br>A 01 N 47/12 |
| D,Y | GB - A - 2 084 574 (HOFFMANN-LA-ROCHE) * Seite 3, Zeilen 8-15,33-40; Ansprüche 15,21,22 * | 1-16 | |
| D,A | EP - A1 - 0 004 334 (HOFFMANN-LA ROCHE) * Anspruch 8; Seite 8, Zeile 1 * | 1,9 | |
| A | DE - A1 - 3 701 459 (CIBA-GEIGY AG) * Anspruch 1; Seite 3, Zeilen 36-39 * | 1,9 | |

RECHERCHIERTE SACHGEBIETE (Int Cl.5)

A 01 N 47/00

Der vorliegende Recherchenbericht wurde für alle Patentansprüche erstellt.

| Recherchenort | Abschlußdatum der Recherche | Prüfer |
|---|---|---|
| WIEN | 25-06-1990 | IRMLER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument